# NEW EUROPEAN PATENT SPECIFICATION

(11) **EP 1 895 850 B2**
(45) Date of publication and mention of the opposition decision: **28.02.2018**
(45) Mention of the grant of the patent: 20.08.2014
(21) Application number: 06747659.8
(22) Date of filing: 30.05.2006
(51) Int. Cl.: A22B 3/06, A22B 3/08

(54) **METHOD AND ARRANGEMENT FOR APPLYING ELECTRONARCOSIS TO FISH**
VERFAHREN UND ANORDNUNG ZUR ANWENDUNG AUF ELEKTRONARKOSE VON FISCH
PROCÉDÉ ET AGENCEMENT PERMETTANT D'ADMINISTRER UNE ÉLECTRONARCOSE À DES POISSONS

(30) Priority: 01.06.2005 NO 20052631
(43) Date of publication of application: 12.03.2008
(73) Proprietor: Kjölaas Stansekniver AS, 6200 Stranda (NO)
(72) Inventor: KJÖLAAS, Frode, Haakon, 6200 Stranda (NO)
(74) Representative: Potter Clarkson LLP
(86) International application number: PCT/NO2006/000201
(87) International publication number: WO 2006/130017

(56) References cited:
- EP-A- 0 917 823
- WO-A1-00/38530
- GB-A- 2 405 073
- US-A- 2 621 362
- US-A- 2 722 036
- US-A- 2 879 539
- US-A- 3 453 684
- US-A- 5 253 610
- US-A- 5 327 854
- US-A- 6 132 303

## Description

The invention relates to a method, as indicated in the introductory part of claim 1, for applying electronarcosis to fish, as well as an arrangement for performing this method.

### Background

It is known to paralyze fish that are to be slaughtered, by immersing them into cooled water with added CO₂. In some countries which have restrictions on the use of CO₂ for this purpose, it has been necessary to seek alternative methods for paralyzing.

It is known to apply electronarcosis to fish to reduce stress and thereby to yield better quality of the fish that are to be slaughtered. From patent publication EP 1 143802 (Møller and Roth), it is known to guide the fish in an electric field with a field strength of about 1.25 volt/cm, with a frequency of above 20 Hz. This requires equipment, which must be biased in the region of 280 volts in water. This is inappropriate in an industrially adapted slaughtering process.

At the Silsoe Research Institute in Great Britain, experiments with paralyzation of fish have been performed, by placing the fish in a water tank and conducting an alternating current of 350 mA through the fish at a frequency from 50 to 2000 Hz. The use of water as a transferring medium makes the equipment complex and makes the process lengthy.

From patent publication US 5.327.854 (Smith et al., 1994) it is known to paralyze fish in a water-conducting tube that extends through the water between two electrodes. However, this also is not suitable for industrial use with fish slaughtering.

From German publication 2 321 646 (Hauni-Werke 1974), it is known to paralyze fish by placing it in an electricity-conducting fluid in a gutter, with an electrode at each end, and applying voltage pulses to the electrodes. A frequency of 40 - 50 Hz and 400 volts as a necessary voltage, are mentioned as an example.

From PCT-application with publication number WO98/44805 (Indac Ltd 1998) it is known to kill a fish by applying two electrodes against the head of the fish. However, this method is not suitable for mass paralyzation of fish, due to inefficient handling of the fish and the problem of reducing the effect to paralyzation only. A further stunning method/arrangement is known from EP-A-0 917 823.

Hence, there is a need for an arrangement that is suitable for paralyzing fish, that are to be slaughtered in a fish slaughterhouse, that is easier to handle during slaughtering.

### Object

The main object of the invention is to provide a method and an arrangement for applying electronarcosis to fish in an easier and more secure way than what has been possible with the prior art, so that the slaughtering process can be performed efficiently and provide good quality slaughtered fish. It is desirable that this takes place without the use of water and with equipment that does not create any risk of hurting the fish, for instance by burn injuries.

It is important that the fish is not exposed to stress during the slaughtering process, so that rigor mortis does not occur quickly. By avoiding exposure of the fish to stress, the lasting ability is prolonged.

Another object of the invention is to make the equipment that is required for performing the method for applying electronarcosis as simple and efficiently usable as possible.

### The invention

The invention is stated in claims 1 and 3, which describe a method and an arrangement for performing this method, respectively.

Primarily, the invention provides a possibility for combining simple equipment with efficient and quick-treatment. It is also established that the resultant paralyzation is appropriate for the quality of the slaughtered fish and for the slaughtering process. It is established that fish, which is slaughtered after electronarcosis as applied according to the invention, stays fresh approximately as long as fish slaughtered one by one under optimal conditions regarding the stressing of the fish.

Special features of the invention are stated in the dependent claims.

Further details of the invention will appear from the following example description.

### Example

The invention is further described below, with reference to the drawing, in which
Fig. 1 illustrates a schematic perspective view of a fish gutter that is made using an arrangement according to the invention,
Fig. 2 illustrates a cross-section view of the fish gutter in Fig. 1, with a fish passing there through,
Fig. 3 illustrates a cross-section vide view of an alternative embodiment of the invention, and
Fig. 4 illustrates a front view of an additional embodiment.

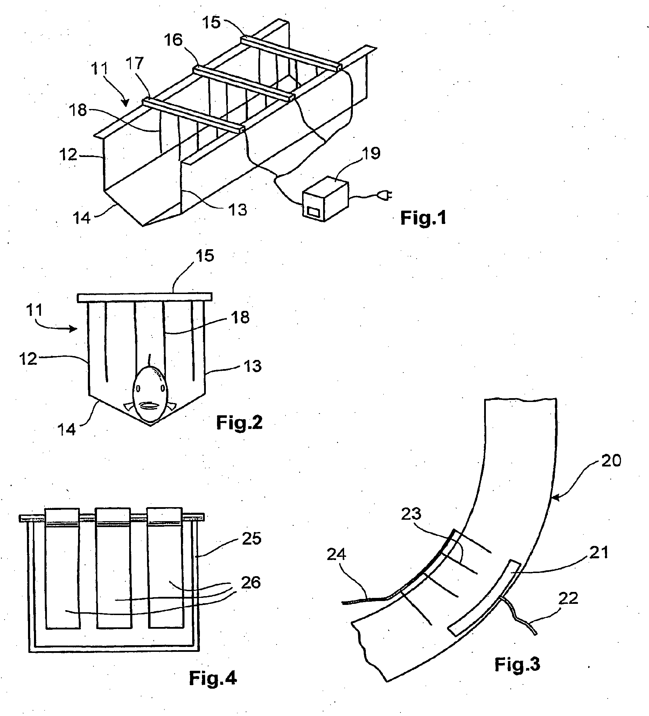

Fig. 1 shows a gutter 11 with parallel side walls 12, 13 and a V-shaped bottom 14, which is arranged with an inclination from an inlet end towards an outlet end. The gutter 11 is made of an electrical isolating material, such as plastic composite.

Three bar-shaped carriers 15, 16, 17 are mounted across the gutter 11, at uniform spacings apart. The carriers 15 - 17 each carry a row of downwardly extending threads 18 of metal or other conducting material, which are freely bendable and which extend down to a level at the lower edge of the side walls 12, 13. The threads in each row are connected to a voltage source 19 that applies a voltage with alternating magnitude from row to row 15 - 17. In an example, the voltage was twelve volts direct voltage between two neighbouring rows.

Fig. 2 shows an example of how a fish passes a row of bendable threads 18, in such a way that at least one thread, two treads in the example, from each of the carriers 15 - 17, are simultaneously in contact with the fish. Thus, the fish will be exposed to a voltage impulse, which triggers a corresponding short-lasting, low current through a part of the fish. The required duration of this current will depend on various conditions, such as the size of the fish and the shaping of the electrodes. It has been found that the current impulse can be short-lasting, with a lower limit at about 0.1 second.

With this equipment and method, the fish was put into electronarcosis or paralyzed for a period of 0.5 to 2 minutes. In this period it was calm, without force in the movements. This made the slaughtering process more efficient.

The electronarcosis could take place without the fish being marked. This means that the method does not unnecessary harm the fish.

Tests have been done with fish that is slaughtered during electronarcosis. They show that the fish does not develop rigor mortis faster than for common fish slaughtering. That means that it is not exposed to stress that triggers enzyme formation and early stiffening.

Figure 3 shows an alternative design of an arrangement for the treatment of fish according to the invention. Here, a tube-shaped channel 20 with a J-shaped path is arranged. In the bend of the channel 20, a plate-shaped metal electrode 21 is arranged on the outer wall, which electrode 21 expands about 45° out to each side and which is connected to a voltage source (not shown), through a cable 22. Diametrically towards the metal electrode 21 are directed four rows of bendable metal threads 23 with three in each row. These metal threads 23 are connected to a joint cable 24 that is also connected to the voltage source (not shown), with a potential difference to the metal electrode 21 of twelve volts.

Fish that were led through the channel 20 with voltage applied through the metal electrode 21 and the metal threads 23, were paralyzed in the corresponding way as in the example above.

### Modifications

The electrodes for applying electrical voltage to the fish can be shaped in various ways, with at least a bendable, thread-shaped or revolvable strip- or plate-shaped electrode. The number of electrodes and their layout can vary with respect to the above examples.

The gutter, through which the fish is led, is used as a carrier for the one or the plurality of bendable thread-shaped electrodes. The gutter can also totally or partially be made of a conducting material, particularly stainless steel, so that this part can constitute an electrode.

Fig. 4 shows a gutter 25 of stainless steel that forms an electrode, and three plate ribbons 26 of a conducting material, especially metal, which at the end are revolvably suspended with a sleeve 27 on a carrier rod 28 and which form the other electrode.

The applied voltage can be in the range of 5 to 30 volts, depending on the type of fish and its size. Experiments with application of direct voltage have been made. However, it is also possible to use alternating voltage, for instance with a frequency of between 50 and 200 Hz.

The arrangement according to the invention is preferably run in a dry state, i.e. without adding water. But there might be fields of use where water is used as a transportation medium.

The invention provides for the possibility for various electrode structures, with two, or more electrode sets after one another along a travel path of the fish, as one of the electrodes can be plate shaped and placed in or be made of the structure that leads the fish.

## Claims

1. A method for applying electronarcosis to fish in a slaughtering process, the method comprising:
applying a voltage to at least two sets (15-17) of electrodes (18), each set (16) of electrodes (18; 21, 23; 26) being spaced apart from the other set(s) (15, 17) after one another along a travel path (11) for the fish wherein the at least two sets (15-17) of electrodes (18; 21, 23; 26) are held exposed to a medium in which the fish moves, the medium essentially consisting of air; and
leading the fish into contact with the at least two sets (15-17) of the electrodes (18; 21, 23; 26), the at least two sets (15-17) of electrodes (18; 21, 23; 26) configured so that a voltage is applied directly to a surface of the fish, wherein the fish is led past the at least two sets (15-17) of electrodes (1; 21, 23; 26) with such a velocity that the voltage is applied to the fish for at least 0.1 second.

2. Method according to claim 1, wherein a direct voltage of approximately 50 volts, preferably 10 - 25 volts, is applied to the sets of electrodes.

3. An arrangement for applying electronarcosis to fish, comprising:
a channel (11; 20) defining a travel path for the fish where the fish can move in a longitudinal direction of the channel (11; 20); and
at least two sets (15-17) of electrodes (18; 21, 23; 26) arranged in the channel (11; 20), each set (16) of electrodes (18; 21, 23; 26) being spaced apart from the other set(s) (15, 17) after one another along the travel path for the fish, wherein the at least two sets (15-17) of electrodes (18; 21, 23; 26) are held exposed to a medium in which the fish moves, the medium essentially consisting of air,
wherein the at least two sets (15-17) of electrodes (18; 21, 23; 26) are configured to enable a voltage to be applied directly to a surface of the fish as the fish is led into contact with the at least two sets (15-17) of electrodes (18; 21, 23; 26), and wherein the at least two sets (15-17) of electrodes (18; 21, 23; 26) are also configured so as to apply that voltage for at least 0.1 second as the fish is led past with a given velocity.

4. Arrangement according to claim 3 comprising a voltage source (19) connected to the electrodes configured to apply a voltage to the at least two sets of electrodes of below approximately 50 volts, preferably 10-25 volts.

5. Arrangement according to claim 3, wherein the channel (11) is gutter-shaped, with a U-shaped or V-shaped bottom (14), and that at least two rod-shaped carriers (15 - 17) with at least one downwardly hanging thread-shaped electrode (18) is arranged above the channel (11).

6. Arrangement according to claim 3, wherein the channel (20) is tube-shaped.

7. Arrangement according to any one of claims 3 - 6, wherein the electrodes comprise a plate electrode (21) and at least one thread-shaped electrode (23) that protrudes towards the plate electrode, so that it defines an opening that is less then transverse dimension of the fish.

8. Arrangement according to any one of the claims 3 - 6, wherein that the electrodes form at least two rows (15 - 17) of bendable threads (18) that protrude laterally into the channel (11).

9. Arrangement according to claim 3, wherein the channel (20) is made in such a way that, at least in some areas, it has electrical conducting inner side, preferably of metal plate, and that at least two, preferably three, juxtaposed electrical conducting plate ribbons (26) are revolvably suspended at an upper edge (25) of the channel, and connected to a voltage source, so that they form an electrode for contact with fish being led through the channel.

## Patentansprüche

1. Verfahren zur Anwendung einer Elektronarkose bei Fischen in einem Schlachtverfahren, wobei das Verfahren die folgenden Schritte umfasst:
Anlegen einer Spannung an mindestens zwei Sätze (15-17) von Elektroden (18), wobei jeder Satz (16) von Elektroden (18; 21, 23; 26) von dem anderen Satz / den anderen Sätzen (15, 17) entlang eines Wanderungswegs (11) für die Fische getrennt voneinander beabstandet ist, wobei die mindestens zwei Sätze (15-17) von Elektroden (18; 21, 23; 26) exponiert zu einem Medium, in dem sich die Fische bewegen, gehalten werden, wobei das Medium im Wesentlichen aus Luft besteht; und
Führen der Fische zu einem Kontakt mit den mindestens zwei Sätzen (15-17) der Elektroden (18; 21, 23; 26), wobei die mindestens zwei Sätze (15-17) von Elektroden (18; 21, 23; 26) so konfiguriert sind, dass eine Spannung direkt auf eine Oberfläche der Fische appliziert wird, wobei die Fische an den mindestens zwei Sätzen (15-17) von Elektroden (1; 21, 23; 26) mit einer derartigen Geschwindigkeit vorbei geführt werden, dass die Spannung auf die Fische während mindestens 0,1 Sekunden appliziert wird.

2. Verfahren nach Anspruch 1, wobei eine direkte Spannung von etwa 50 Volt, vorzugsweise von 10-25 Volt, an die Elektrodensätze angelegt wird.

3. Anordnung zum Anwenden einer Elektronarkose bei Fischen, umfassend:
einen Kanal (11; 20), der einen Wanderungsweg für die Fische definiert, wobei die Fische sich in einer Längsrichtung des Kanals (11; 20) bewegen können; und
mindestens zwei Sätze (15-17) von Elektroden (18; 21, 23; 26), angeordnet in dem Kanal (11; 20), wobei jeder Satz (16) von Elektroden (18; 21, 23; 26) von dem anderen Satz / den anderen Sätzen (15, 17) entlang eines Wanderungswegs für die Fische getrennt voneinander beabstandet ist, wobei die mindestens zwei Sätze (15-17) von Elektroden (18; 21, 23; 26) exponiert zu einem Medium, in dem sich die Fische bewegen, gehalten werden, wobei das Medium im Wesentlichen aus Luft besteht; und
wobei die mindestens zwei Sätze (15-17) von Elektroden (18; 21, 23; 26) so konfiguriert sind, dass eine Spannung direkt an eine Oberfläche der Fische angelegt werden kann, wenn die Fische in Kontakt mit den mindestens zwei Sätzen (15-17) von Elektroden (18; 21, 23; 26) geführt werden und wobei die mindestens zwei Sätze (15-17) von Elektroden (18; 21, 23; 26) auch so konfiguriert sind, dass diese Spannung während mindestens 0,1 Sekunden appliziert wird, wenn die Fische bei einer gegebenen Geschwindigkeit vorbei geführt werden.

4. Anordnung nach Anspruch 3, die eine Spannungsquelle (19) umfasst, die mit den Elektroden verbunden ist, die so konfiguriert sind, dass eine Spannung von unter etwa 50 Volt, vorzugsweise von 10-25 Volt an die mindestens zwei Elektrodensätze angelegt wird.

5. Anordnung nach Anspruch 3, wobei der Kanal (11) rinnenförmig mit einem U-förmigen oder V-förmigen Boden (14) ausgeformt ist und wobei mindestens zwei stabförmige Träger (15-17) mit mindestens einer nach unten hängenden fadenförmigen Elektrode (18) oberhalb des Kanals (11) angeordnet sind.

6. Anordnung nach Anspruch 3, wobei der Kanal (20) schlauchförmig ist.

7. Anordnung nach einem der Ansprüche 3-6, wobei die Elektroden eine flächenförmige Elektrode (21) und mindestens eine fadenförmige Elektrode (23), die in Richtung auf die flächenförmige Elektrode ragt, so dass sie eine Öffnung definiert, die kleiner als die Querabmessungen der Fische ist, umfassen.

8. Anordnung nach einen der Ansprüche 3-6, wobei die Elektroden mindestens zwei Reihen (15-17) von biegbaren Fäden (18) bilden, die lateral in den Kanal (11) ragen.

9. Anordnung nach Anspruch 3, wobei der Kanal (20) in einer derartigen Weise hergestellt ist, dass er zumindest in einigen Bereichen eine elektrisch leitende innere Seite, vorzugsweise aus einer Metallplatte, aufweist und dass mindestens zwei, vorzugsweise drei, nebeneinander liegende, elektrisch leitende flächenförmige Bänder (26) drehbar an einer oberen Kante (25) des Kanals aufgehängt sind und mit einer Spannungsquelle verbunden sind, so dass sie eine Elektrode für einen Kontakt mit den durch den Kanal geführten Fischen bilden.

## Revendications

1. Procédé d'application d'électronarcose à des poissons dans un processus d'abattage, le procédé comprenant :
l'application d'une tension à au moins deux jeux (15 à 17) d'électrodes (18), chaque jeu (16) d'électrodes (18 ; 21, 23 ; 26) étant espacé du ou des autres jeux (15, 17) les uns derrière les autres le long d'une voie de circulation (11) du poisson, dans lequel les au moins deux jeux (15 à 17) d'électrodes (18 ; 21, 23 ; 26) sont maintenus exposés à un milieu dans lequel le poisson se déplace, le milieu consistant principalement en air ; et
la mise en contact du poisson avec les au moins deux jeux (15 à 17) des électrodes (18 ; 21, 23 ; 26), les au moins deux jeux (15 à 17) d'électrodes (18 ; 21, 23 ; 26) étant configurés de sorte qu'une tension soit appliquée directement sur une surface du poisson, le poisson étant amené à passer les au moins deux jeux (15 à 17) d'électrodes (1 ; 21, 23 ; 26) à une telle vitesse que la tension soit appliquée au poisson pendant au moins 0,1 seconde.

2. Procédé selon la revendication 1, dans lequel une tension continue d'approximativement 50 volts, de préférence de 10 à 25 volts, est appliquée aux jeux d'électrodes.

3. Agencement pour appliquer une électronarcose à un poisson, comprenant :
un canal (11 ; 20) définissant une voie de circulation du poisson où le poisson peut se déplacer dans une direction longitudinale du canal (11 ; 20) ; et
au moins deux jeux (15 à 17) d'électrodes (18 ; 21, 23 ; 26) agencés dans le canal (11 ; 20), chaque jeu (16) d'électrodes (18 ; 21, 23 ; 26) étant espacé du ou des autres jeux (15, 17) les uns derrière les autres le long de la voie de circulation du poisson, dans lequel les au moins deux jeux (15 à 17) d'électrodes (18 ; 21, 23 ; 26) sont maintenus exposés à un milieu dans lequel le poisson se déplace, le milieu consistant principalement en air,
dans lequel les au moins deux jeux (15 à 17) d'électrodes (18 ; 21, 23 ; 26) sont configurés pour permettre l'application d'une tension directement sur une surface du poisson lorsque le poisson est amené au contact avec les au moins deux jeux (15 à 17) d'électrodes (18 ; 21, 23 ; 26), et dans lequel les au moins deux jeux (15 à 17) d'électrodes (18 ; 21, 23 ; 26) sont également configurés de façon à appliquer cette tension pendant au moins 0,1 seconde lorsque le poisson est amené à passer à une vitesse donnée.

4. Agencement selon la revendication 3, comprenant une source de tension (19) connectée aux électrodes configurée pour appliquer une tension aux au moins deux jeux d'électrodes de moins d'approximativement 50 volts, de préférence de 10 à 25 volts.

5. Agencement selon la revendication 3, dans lequel le canal (11) est en forme de gouttière, avec un fond en forme de U ou de V (14), au moins deux porteuses en forme de tige (15 à 17) avec au moins une électrode de forme filetée pendant vers le bas (18) agencée au-dessus du canal (11).

6. Agencement selon la revendication 3, dans lequel le canal (20) est en forme de tube.

7. Agencement selon l'une quelconque des revendications 3 à 6, dans lequel les électrodes comprennent une électrode plaque (21) et au moins une électrode de forme filetée (23) qui fait saillie vers l'électrode de plaque, de sorte qu'elles définissent une ouverture qui est inférieure à la dimension transversale du poisson.

8. Agencement selon l'une quelconque des revendications 3 à 6, dans lequel les électrodes forment au moins deux rangées (15 à 17) de filetage pliable (18) qui fait saillie latéralement dans le canal (11).

9. Agencement selon la revendication 3, dans lequel le canal (20) est constitué de telle sorte que, au moins dans certaines zones, il ait un côté interne électroconducteur, de préférence une plaque de métal, et au moins deux, de préférence trois, rubans de plaques électroconductrices juxtaposées (26) sont suspendus avec faculté de rotation au niveau d'un bord supérieur (25) du canal, et connectés à une source de tension, de sorte qu'ils forment une électrode pour un contact avec le poisson étant amené à travers le canal.
